(19)

Europäisches
Patentamt

European
Patent Office

Office européen
des brevets

(11) **EP 3 401 908 A1**

(12) **EUROPEAN PATENT APPLICATION**

(43) Date of publication:
**14.11.2018 Bulletin 2018/46**

(51) Int Cl.:
**G10L 25/51** (2013.01)    **G06K 9/62** (2006.01)
**G10L 25/18** (2013.01)

(21) Application number: **17305545.0**

(22) Date of filing: **12.05.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• **KITIC, Srdan
35 576 Cesson Sévigné (FR)**
• **VIGOUROUX, Jean-Ronan
35 576 Cesson Sévigné (FR)**
• **GILBERTON, Philippe
35 576 Cesson Sévigné (FR)**

(74) Representative: **Vidon Brevets & Stratégie
16B, rue de Jouanet
BP 90333
35703 Rennes Cedex 7 (FR)**

(54) **DEVICE AND METHOD FOR WALKER IDENTIFICATION**

(57)    A device (100) and method for walker identification. An audio input interface (141) obtains (S210) a sampled acoustic signal, possibly from a microphone (161), a vibration input interface (142) obtains (S210) a sampled vibration signal, possibly from a geophone (162) and at least one hardware processor (110) fuses (S220) the sampled acoustic signal and the sampled vibration signal into a fused signal, extracts (S230) features from the fused signal and identifies (S240) a walker based on extracted features.

| S210 | Capture audio and vibration data |
| S220 | Fuse audio and vibration data |
| S230 | Extract features for gait identification |
| S240 | Use extracted features to identify walker |

Figure 2

EP 3 401 908 A1

**Description**

TECHNICAL FIELD

The present disclosure relates generally to multimodal recognition and in particular to identification of persons based on footfalls.

BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Acoustic sensing is particularly suitable for monitoring people activity or even identification as it is relatively non-intrusive and can be performed without other sensors than acoustic ones such as microphones, vibration or ultrasound sensors depending on the frequency spectrum it would require covering.

A particularly non-intrusive way to identify people is through human gait biometrics. Different approaches to gait-based identification have been already proposed in the past, exploiting various signal modalities influenced by walk pattern, such as audio [see Rafael Lima de Carvalho, Paulo Fernando Ferreira Rosa, "Identification System for Smart Homes Using Footstep Sounds" IEEE 2010], video [see P. J. Phillips, S. Sarkar, I. Robledo, P. Grother, and K. Bowyer, "The Gait Identification Challenge Problem: Data Sets and Baseline Algorithm" in Pattern Recognition, 2002. Proceedings. 16th International Conference on, vol. 1, pp. 385-388, IEEE, 2002] or underfloor accelerometer measurements [D. Bales, P. Tarazaga, M. Kasarda, D. Batra, A. Woolard, J. D. Poston, and V. Malladi, "Gender Classification of Walkers via Underfloor Accelerometer Measurements," IEEE Internet of Things Journal, 2016]. However, these techniques suffer of different drawbacks such as performance disparity and ambient noise sensitivity [Carvalho et al.], privacy [Phillips et al.] or infrastructure cost [Bales et al.].

US 7616115 discloses detection of human footsteps in which a dual-modality sensor in a device captures seismic signals from footfalls and, when the intensity is above a threshold, transmits an ultrasound signal for which the Doppler shifted echo is captured an analysed. The device determines that the seismic signal belongs to a human walker when the velocity of the feet (based on the echo) is close to zero and, at essentially the same time, the seismic signal peaks. As can be seen, the solution is not for identification and the combination of the signals does not reinforce features therein; the echo is at most used as confirmation of the seismic signal.

It will be appreciated that there is a desire for a solution that addresses at least some of the shortcomings of the conventional solutions. The present principles provide such a solution.

SUMMARY OF DISCLOSURE

In a first aspect, the present principles are directed to a device for walker identification comprising an audio input interface configured to obtain a sampled acoustic signal, a vibration input interface configured to obtain a sampled vibration signal, and at least one hardware processor configured to fuse the sampled acoustic signal and the sampled vibration signal into a fused signal, extract features from the fused signal and identify a walker based on extracted features.

Various embodiments of the first aspect include:

- That the device further comprises an audio capture device coupled to the audio input interface.
- That the device further comprises a vibration capture device coupled to the vibration input interface. The vibration capture device can be a geophone.
- That the sampled audio signal and the sampled vibration signal are fused by extracting essentially overlapping frames of the sampled audio signal and the sampled vibration signal to obtain a plurality of audio frames and vibration frames, convolving each extracted audio frame with a wavelet to obtain audio coefficients, convolving each extracted vibration frame with the wavelet to obtain vibration coefficients, computing a weighted average of the audio coefficients and the vibration coefficients to obtain signal coefficients in the wavelet domain, and computing an inverse wavelet transform of the signal coefficients to obtain the fused signal in time-domain.

- That the features are extracted from a time-frequency representation by computing Fourier modulus over time to obtain processed features and by reducing a dimensionality of the processed features.
- That the device further comprises an output interface or a user interface configured to output an identifier of an identified walker.

In a second aspect, the present principles are directed to a method for walker identification comprising, at a device, obtaining by an audio input interface a sampled acoustic signal, obtaining by a vibration input interface a sampled vibration signal, fusing by at least one hardware processor the sampled acoustic signal and the sampled vibration signal into a fused signal, extracting by the at least one hardware processor features from the fused signal, and identifying by the at least one hardware processor a walker based on extracted features.

Various embodiments of the second aspect include:

- That the method further comprises receiving by the vibration input interface a vibration signal from a geophone.
- That the at least one hardware processor is configured to fuse the sampled audio signal and the sampled vibration signal by extracting essentially overlapping frames of the sampled audio signal and the sampled vibration signal to obtain a plurality of audio frames and vibration frames, convolving each extracted audio frame with a wavelet to obtain audio coefficients, convolving each extracted vibration frame with the wavelet to obtain vibration coefficients, computing a weighted average of the audio coefficients and the vibration coefficients to obtain signal coefficients in the wavelet domain, and computing an inverse wavelet transform of the signal coefficients to obtain the fused signal in time-domain.
- That the at least one hardware processor is configured to extract the features by extracting standard features, computing Fourier modulus over time to obtain processed features, and reducing the dimensionality of the processed features.
- That the method further comprises outputting by the at least one hardware processor via an output interface or a user interface an identifier of an identified walker.

In a third aspect, the present principles are directed to a computer program comprising program code instructions executable by a processor for implementing the method according to the second aspect.

In a fourth aspect, the present principles are directed to a computer program product which is stored on a non-transitory computer readable medium and comprises program code instructions executable by a processor for implementing the method according to the second aspect.

BRIEF DESCRIPTION OF DRAWINGS

Preferred features of the present principles will now be described, by way of non-limiting example, with reference to the accompanying drawings, in which:

Figure 1 illustrates a device for walker identification according to the present principles;
Figure 2 illustrates a method of walker identification according to an embodiment of the present principles;
Figure 3 illustrates an exemplary fusion result;
Figure 4 illustrates lack of invariance in two exemplary MFCC representations; and
Figure 5 illustrates a DET curve for exemplary data using vibration data only, audio data only and fused audio and vibration data for walker recognition.

DESCRIPTION OF EMBODIMENTS

Generally speaking, the present principles provides walker identification based on both acoustic and vibration data that are fused before identification. The resulting effect can provide better recognition performances compared to using them separately.

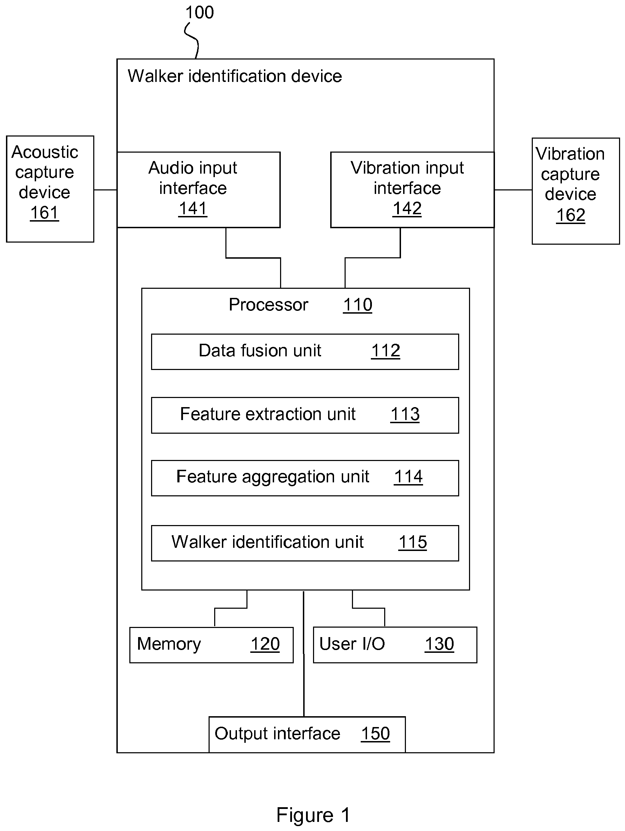

Figure 1 illustrates a device for walker identification 100 according to the present principles. The device 100 includes at least one hardware processing unit ("processor") 110 configured to execute instructions of a first software program and to process audio and vibration data for walker identification, as will be further described hereinafter. The device 100 further includes at least one memory 120 (for example ROM, RAM and Flash, or a combination thereof) configured to store the software program and data required to process and identify captured audio. The device 100 also includes at least one user communications interface ("User I/O") 130 for interfacing with a user.

The device 100 further includes an audio input interface 141 configured for connection to an acoustic capture device 161 and a vibration input interface 142 configured for connection to a vibration capture device 162. The acoustic capture device 161 can be a microphone and the vibration capture device 162 can be a geophone. The capture devices have been described as external to the device 100, but one or both capture devices can instead be included in the device 100.

Vibrations induced by walking (in particular by footfalls), and acquired through geophones [see for example S. Pan, N. Wang, Y. Qian, I. Velibeyoglu, H. Y. Noh, and P. Zhang, "Indoor Person Identification Through Footstep Induced Structural Vibration," in Proceedings of the 16th International Workshop on Mobile Computing Systems and Applications, pp. 81-86, ACM, 2015], can offer several practical advantages over other commonly used types of signals. A first advantage is that security can be increased since it appears that no simple existing method that can reproduce accurately one's gait in terms of the vibration signal. A second advantage is privacy-preservation: vibration data are usually not considered confidential or even sensitive information. Finally, a third potential advantage is simple and cheap setup: typically, a single geophone is sufficient to monitor a medium-sized room. However, while on the one hand the use of vibrations is attractive for the mentioned reasons, the information content is relatively low due to the very limited bandwidth (usually < 300 Hz), on the other hand, human footstep energy is also contained above 1 kHz and spans up to ultrasonic frequencies. As this is out of reach for standard geophones, potentially important information is lost when using only geophones.

In addition to vibrations (wave propagation in solids), a walking human also produces audible signals (in particular through the footfalls) that can be registered by conventional microphones. These acoustic signals have a much wider bandwidth, and, in addition to footsteps, they also capture sound generated by, for example, friction of the upper body (i.e. due to leg and arm movements). However, using a microphone comes at the price of not being able to provide the second advantage of vibration signals, the preservation of privacy, to the full.

The input interfaces are configured to deliver sampled data to the processor 110, possibly sampled at different frequency rate, for example 44,100 kHz for acoustic signal and 1 kHz for vibration.

The processor 110 is illustrated to include a number of functional units that correspond to different stages of the walker identification.

Data fusion unit 112 is configured to perform data fusion on the acoustic data from the audio input interface 141 and the vibration data from the vibration input interface 142, as will be further described hereinafter.

Feature extraction unit 113 is configured to extract feature from data fused by the data fusion unit 112, based on for example MFCC (Mel Frequency Cepstrum Coefficients) or scattering transform, as will be further described hereinafter.

Feature aggregation unit 114 is configured to aggregate features extracted by feature extraction unit 113, as will be further described hereinafter.

Walker identification unit 115 is configured to identify walkers from aggregated features to provide a walker identity if the walker has been recognised. If the walker is not recognised, the walker identification unit 115 can provide an indication that the walker is unknown. This will also be further described hereinafter.

The device 100 additionally includes an output interface 150 configured to output information about analysed audio and identified walkers, for example for presentation on a screen or by transfer to a further device (not shown).

The device 100 is preferably implemented as a single device, but its functionality can also be distributed over a plurality of devices.

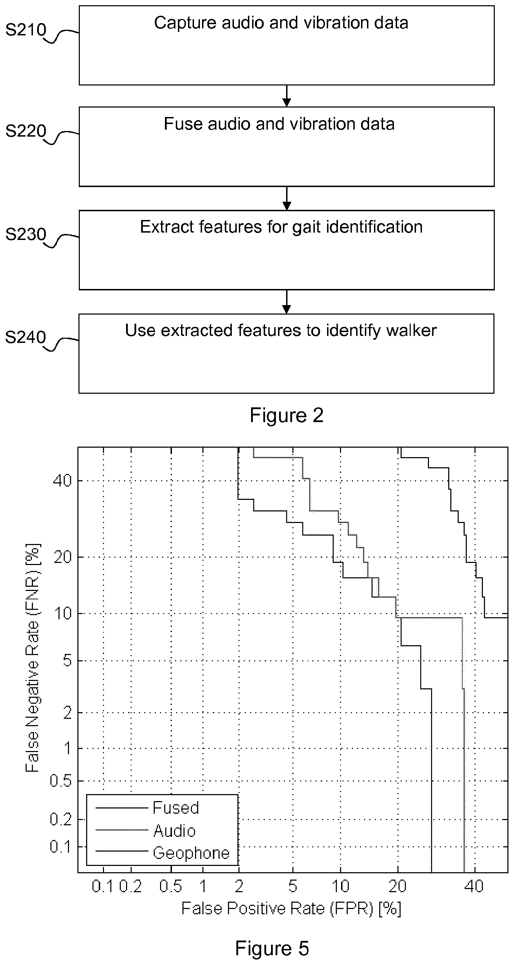

Figure 2 illustrates a method of walker identification according to an embodiment of the present principles.

Audio and vibration capture

In step S210, the acoustic capture device 161 and the vibration capture device 162 capture audio and vibration data as described hereinafter, possibly in cooperation with, respectively, the audio interface unit 141 and the vibration interface unit 142.

The vibration capture device 162 and the vibration interface unit 142 are configured to capture vibration data using a conventional signal processing chain - analogue amplifier, filtering, Analog-to-Digital Conversion (ADC) - with a low frequency sampling rate such as for example 1 kHz to respect the Nyquist cut-off frequency as for instance a geophone provides low-frequency audio components, typically below 300hz.

The acoustic capture device 161 and the audio interface unit 141 are configured to captured audio data, preferably based on the same signal processing chain as for the vibration data, but with a higher sampling frequency rate such as for example 44.1 kHz to cope better with the higher frequency range of the audio data.

The signals after digital sampling are expressed as follows.

r denotes the coordinates of the impact (footfall) point relative to the position of the capture devices 161, 162 (assumed the be the same for the acoustic capture device 161 and the vibration capture device 162), t denotes time and $\omega$ denotes the angular frequency. The 'hat' notations $\hat{\cdot}$ denotes the Fourier representation $F(\cdot)$ of a signal.

Acoustic pressure signal $\hat{p}_a(\omega, \vec{r}) = \mathcal{F}\big(\hat{p}_a(t, \vec{r})\big)$ can be related to the (vertical) vibration particle velocity $\hat{v}(\omega)$ at the impact point, as follows [see A. Ekimov and J. M. Sabatier, "Vibration and Sound Signatures of Human Footsteps in Buildings," The Journal of the Acoustical Society of America, vol. 118, no. 3, pp. 762-768, 2006]:

$$\hat{p}_a(\omega, \vec{r}) = H_a(\omega, \vec{r})\hat{v}(\omega) = G_a(\omega, \vec{r})\frac{\hat{v}(\omega)}{z(\omega)} + \hat{e}_a(\omega)$$

where $\hat{e}_a(\omega)$ is the additive noise of the acoustic capture device, and $H_a(\omega,\vec{r})$ denotes the transfer function. The transfer function includes specific acoustic impedance $z(\omega)$ (which is a material-related quantity of a medium [see F. J. Fahy, Foundations of engineering acoustics. Academic press, 2000]) at the impact point, and the (air) impulse response $G_a(\omega,\vec{r})$ relating the impact point and the location of the acoustic capture device. While it may be assumed that the floor is an isotropic solid - thus $z(\omega)$ does not change significantly with regard to r - the impulse response $G_a(\omega,\vec{r})$ changes from one position to another.

A geophone, which will be used as a non-limitative example of the vibration capture device, measures the voltage corresponding to the velocity of the proof mass relative to the device case. When the measured frequencies are on the order of device's natural frequency, the velocity of the proof mass can be related to the ground displacement velocity [see M. S. Hons and R. R. Stewart, "Transfer Functions of Geophones and Accelerometers and Their Effects on Frequency Content and Wavelets," CREWES Res. Rep, vol. 18, pp. 1-18, 2006], and thus, to the impact point velocity $\hat{v}(\omega)$ [see A. Ekimov and J. M. Sabatier, "Vibration and Sound Signatures of Human Footsteps in Buildings" The Journal of the Acoustical Society of America, vol. 118, no. 3, pp.762-768, 2006] as

$$\hat{v}_g(\omega,\vec{r}) = H_g(\omega,\vec{r})\hat{v}(\omega) = S_g G_g(\omega,\vec{r})\hat{v}(\omega) + \hat{e}_g(\omega)$$

where $\hat{e}_g(\omega)$ is the additive noise of the geophone, Sg is the its sensitivity constant, and $G_g(\omega,\vec{r})$ is the impulse response within the floor (and hence different from $G_a(\omega,\vec{r})$)

If the vibration frequencies significantly exceed the natural frequency range of a geophone, the measured voltage is no longer a direct manifestation of the ground motion, which is why the sampling rate of associated ADCs (Analogue-to-Digital-Convertors) can be limited to a low frequency value in accordance to operating frequency range of the geophone, e.g. fg is on the order of 1 kHz. The sampling rate of standard acoustic microphones, $f_a$, is usually such that it can faithfully capture frequencies within the human auditory spectrum, i.e. $f_a/2$ is around 20 kHz. On the other hand, the compact low-cost microphone (usually based on MEMS (MicroElectroMechanical System) technology) preferred in the described embodiment suffers from poor response at low frequency range - the SNR (Signal-to-Noise-Ratio) below 500 Hz is low. Hence, the vibration sensor may enhance the acquisition at such low frequencies. For the same SNR level, however, microphones still output signals that are more informative than geophone measurements, since their Shannon capacity is higher.

The impulse responses $G_a(\omega,\vec{r})$ and $G_g(\omega,\vec{r})$ (and therefore, signals $\hat{p}_a(\omega,\vec{r})$ and $\hat{v}_g(\omega,\vec{r})$) are dependent on r, which is the parameter that cannot be controlled - it is the relative position of a walking person and the capturing devices. Thus, the position normally changes with time, i.e., $\vec{r} := \vec{r}(t),$ and it can be assumed that this function varies slowly. Hence, within short temporal window, it is assumed that the impulse responses are stationary with respect to $\vec{r}$, and it is thus possible to make the following approximations: $p_a(t,\vec{r}) \approx p_a(t)$ and $v_g(t,\vec{r}) \approx v_g(t).$ The approximation errors are included in the error terms $e_a(t)$ and $e_g(t)$.

Data fusion

In step S220, the data fusion unit 112 in the processor 110 fuses the captured audio data and the vibration data, as will be described hereinafter.

The data fusion of the present principles is inspired by direct fusion methods widely used visual data in so called remote sensing [see for example J. Zhang, "Multi-Source Remote Sensing Data Fusion: Status and Trends," International Journal of Image and Data Fusion, vol. 1, no. 1, pp. 5-24, 2010] wherein the fusion is termed "pixel-level" fusion). A considerable amount of research in remote sensing is devoted to integrating images of different resolution and spectral content. Particularly, the goal is to fuse high-resolution panchromatic images (e.g. grayscale), with low-resolution multi-spectral images (e.g. RGB), acquired by different imaging devices, in order to obtain high-resolution multi-spectral output. Simply put, the various modalities are considered to be the same signal, acquired at different sampling rates and across different frequency bands.

For the present principles, sound and vibrations represent different signal modalities in the physical sense. While they originate from the same latent signal - the particle velocity $\hat{v}(\omega)$ -their effective bandwidths (i.e. frequency ranges relevant to the latent signal) are different, but to a certain extent complementary. Thus, the present principles use a direct fusion technique that yields an artificial "acoustico-vibration" signal, whose effective bandwidth comprises those of each individual modality. A preferred way of doing this is through multiresolution analysis, i.e. signal fusion in wavelet domain, which will be described hereinafter.

For reasons of simplicity of explanation, it is assumed that the geophone signal $v_g(t, \vec{r})$ has been up-sampled and aligned with the microphone signal $p_a(t, \vec{r})$. It should however be noted that the up-sampling is not required. In practice, the two signals are usually not perfectly synchronized, and the data fusion unit 112 can apply a synchronization method as a pre-processing step. In addition, the data fusion unit 112 can also perform noise reduction on the signals beforehand. (It is noted that noise reduction can also be performed by the respective input interface interfaces 141, 142).

In an optional intermediate step, magnitudes of the signals of the two modalities are normalized to avoid one signal dominating another when fused.

Assuming that the two time series are essentially in sync, overlapping segments (frames), whose duration exceeds the time needed to capture two footfalls with the same leg, are extracted. The goal of this is to capture not only the local individual gait characteristics (i.e. local spectral signature), but also its global behaviour, such as typical rhythm of walk. This is why the use of sophisticated signal detection methods, e.g. such as Voice Activity Detection (VAD) in speaker/speech recognition [see J. Ramirez, J. M. Gorriz, and J. C. Segura, "Voice Activity Detection. Fundamentals and Speech Recognition System Robustness". INTECH Open Access Publisher NewYork, 2007] is minimal, as the pauses between footfalls are considered as part of the gait signature, whereas such methods remove silences as far as possible. However, there is a trade-off: increasing the temporal duration of the segments progressively violates the local stationarity assumption made on the impulse responses. According to Ekimov et al. [A. Ekimov and J. M. Sabatier, "Rhythm Analysis of Orthogonal Signals from Human Walking" The Journal of the Acoustical Society of America, vol. 129, no. 3, pp. 1306-1314, 2011], the average period of normal walk is about 1:22s; in the present principles, signals are thus segmented into frames longer than this time, such as e.g. T = 1:5s.

Next, a wavelet filter bank is used to decompose both signals [see S. Mallat, "A Wavelet Tour of Signal Processing". Academic Press, 1999.]. The present principles use, as a non-limitative example (other, e.g. non-dyadic, wavelet types may also be used), multiresolution analysis design, i.e. wavelets built by translations (k) and dyadic dilations ($2^j$) of a mother wavelet function $\psi(t)$:

$$\psi_{j,k}(t) = 2^{\frac{1}{2}}\psi\left(2^j t - k\right)$$

In the frequency domain, wavelets behave as band-pass filters [see Mallat]. Their frequency support is concentrated around central frequencies $f_{j,k}$, with bandwidth proportional to $2^{-j}$, i.e. larger scale $j$ means narrower bandwidth.

The set of coefficients corresponding to each scale $j$ and translation $k$ is obtained by convolving the signal, e.g. $p_a(t)$, with an appropriate wavelet:

$$c_{j,k}(\tau)_a = \sum_t \psi_{j,k}(\tau - t)p_a(t)$$

Conversely, the set of coefficients $c_{j,k}(\tau)_g$ is obtained by convolving $v_g(t)$, with the same type of wavelets.

The signals are fused by computing the weighted average of wavelet decomposition coefficients at corresponding scales:

$$c_{j,k}(\tau)_{fused} = \alpha_j c_{j,k}(\tau)_g + \left(1 - \alpha_j\right)c_{j,k}(\tau)_a$$

with the weights $\alpha_j \in [0,1]$. At scales corresponding to central frequencies $f_{j,k} < f_g/2$, $\alpha_j > 0.5$, otherwise $\alpha_j < 0.5$, where more preference is given to geophone or audio signal, respectively. A simple choice is $\alpha_j \in \{0,1\}$, i.e. the coefficients are taken from either the geophone or the audio wavelet representation, according to the scale. Finally, the fused wavelet coefficients are converted back into the time domain by applying the inverse wavelet transform.

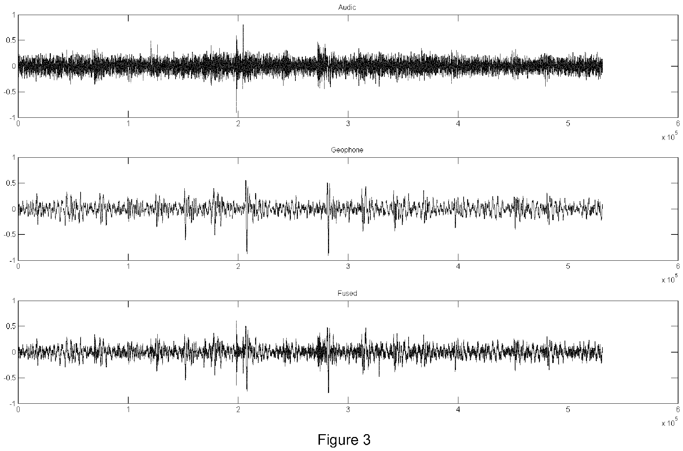

Figure 3 illustrates an example fusion result with an audio signal on top, a vibration signal in the middle and a resulting fused signal below.

Feature extraction and aggregation

Once the fused signal is available, in step S230, the feature extraction unit 113 of the processor 110 extracts useful features for gait identification and feature aggregation unit 114 aggregates the extracted features, as will be described hereinafter.

Feature extraction unit 113 can use any one of a variety of conventional extraction techniques, such as MFCC (Mel Frequency Cepstrum Coefficients) and scattering transform [see Anden et al.].

However, standard features, provided by for example MFCC and scattering transform, are either not sufficiently invariant when the frame duration is as large as in the present principles, or their computation complexity becomes a prohibitive factor.

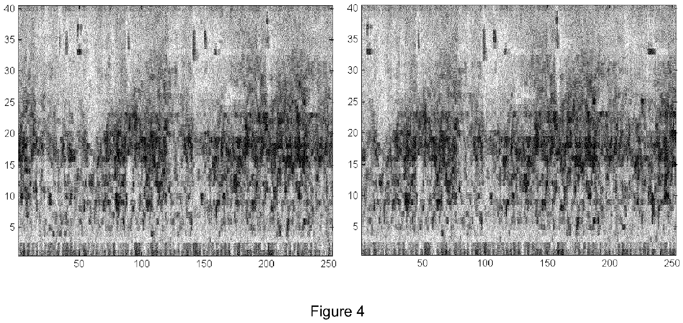

To illustrate the lack of invariance, consider two exemplary MFCC representations presented in Figure 4 - in which blue indicates low magnitude and red indicates high magnitude - extracted from an audio gait signal at two different time instances. The observed "magnitude clusters" correspond to periodic footfalls, with more-or-less equal delay between each pair. However, a presence of an arbitrary time offset among them makes the two representations time-variant. This can easily be avoided by computing the Fourier modulus across each row (thus, over time), which is perfectly suited for this type of signals due to presumed periodicity of the human gait.

The feature aggregation unit 114 exploits the particular nature of the gait signal and adapts extracted features such that they natively incorporate invariant time-frequency information. An advantage of doing this is that it can allow for liberty and simplicity in choosing a classifier, such as the GMM-UBM system, which in itself will not be described in detail since it is well known to the skilled person.

Many conventional extraction techniques output many features; for example, MFCC gives a number (e.g. 40) of coefficients per subframe which is to multiplied by the number of frames (e.g. 61) in the frame. Such a large number of features can lead to the curse of dimensionality, and it is preferred that the feature aggregation unit 114 applies dimensionality reduction techniques, such as PCA (Principal Component Analysis) (or its approximation through DCT - Discrete Cosine Transform) to obtain a compact set of features, which then preferably is augmented with an average taken in horizontal direction, i.e. concatenating the mean MFCC vector.

Walker identification

In step S240, the walker identification unit 115 of the processor 110 identifies a walker as described hereinafter.

The walker identification algorithm can be based on a Gaussian Mixture Model Universal Background Model (GMM-UBM) classifier that is well known in the art, where it is usually applied to speaker recognition, but here applied in a novel context as gait recognition. This an example of an algorithm that demonstrates the advantage of using multimodal (fused) data over unimodal (only audio, or only geophone measurements), but it will be understood that other suitable algorithms may also be used.

Identifying people by their speech - speaker recognition - is a well-known and thoroughly explored field. It is posited that identification by gait is closely related to speaker recognition - in essence, they both seek patterns in a given time series (speech or gait measurements) that discriminate one person from another. They also share the same issues. Problems with speaker recognition include capturing temporal dynamics in text-dependent speaker recognition, distinguishing voice from silence and environmental noise (Voice Activity Detection, VAD), separating signals from a particular individual in multi-speaker setting (speaker diarisation: a set of techniques for differentiating multiple voices in human conversation over time) and identification in the setting where unknown speakers may be present in the test data (open set classification). As can be seen by replacing "speaker" to "walker", and "voice" to "gait" in the previous sentence, gait recognition has analogous problems, even though this has not been recognised in publications.

The gist of conventional speaker recognition algorithms are GMM-UBM models. A vast and comprehensive literature is available on this subject, notably D. A. Reynolds and W. M. Campbell, "Text-Independent Speaker Recognition," in Springer Handbook of Speech Processing, pp. 763-782, Springer, 2008.

In essence, GMM-UBM assumes that feature vectors are drawn from multivariate normal distributions. Each individual is represented by an individual model generated from training vectors derived from data specific to the individual. During identification, a likelihood ratio test is performed for each walker:

$$\frac{p\left(\chi|\lambda^{(k)}\right)}{p\left(\chi|\lambda^{(UBM)}\right)} \geq \tau \text{ means that } \chi \text{ was generated from walker } k,$$

where $\tau$ is the acceptance threshold, $\chi$ is the set of observed feature vectors, $p(\chi|\lambda^{(k)})$ is the product likelihood of the adapted model representing $k^{th}$ target individual, while $p(\chi|\lambda^{(UBM)})$ represents the product likelihood of a background ("world") model.

It should be noted that there is always a possibility of false acceptance and false rejections, depending on a chosen threshold T. Thus, the performance of different features/parameterizations/pre- and post-processing approaches is often visualized by a DET (Detection Error Tradeoff) curve [see A. Martin, G. Doddington, T. Kamm, M. Ordowski, and M. Przybocki, "The DET Curve in Assessment of Detection Task Performance," Tech. Rep., DTIC Document, 1997]., which we also use to evaluate the performance of the system operating on unimodal and fused datasets, in the next section. Figure 5 illustrates a DET curve for exemplary data using vibration data only, audio data only and fused audio and vibration data from a geophone for walker recognition. As can be seen, the best performance is given by the fused data.

It will thus be appreciated that the present principles can provide a solution for walker recognition that can enable improved recognition through the use of fused audio and vibration data.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

**Claims**

**1.** A device (100) for walker identification comprising:

an audio input interface (141) configured to obtain a sampled acoustic signal;

a vibration input interface (142) configured to obtain a sampled vibration signal;
and
at least one hardware processor (110) configured to:

    fuse the sampled acoustic signal and the sampled vibration signal into a fused signal;
    extract features from the fused signal; and
    identify a walker based on extracted features.

2. The device of claim 1, further comprising an audio capture device (161) coupled to the audio input interface.

3. The device of claim 1, further comprising a vibration capture device (162) coupled to the vibration input interface.

4. The device of claim 3, wherein the vibration capture device (162) is a geophone.

5. The device of claim 1, wherein the sampled audio signal and the sampled vibration signal are fused by:

    extracting essentially overlapping frames of the sampled audio signal and the sampled vibration signal to obtain a plurality of audio frames and vibration frames;
    convolving each extracted audio frame with a wavelet to obtain audio coefficients;
    convolving each extracted vibration frame with the wavelet to obtain vibration coefficients;
    computing a weighted average of the audio coefficients and the vibration coefficients to obtain signal coefficients in the wavelet domain; and
    computing an inverse wavelet transform of the signal coefficients to obtain the fused signal in time-domain.

6. The device of claim 1, wherein the features are extracted from a time-frequency representation by:

    computing Fourier modulus over time to obtain processed features; and
    reducing a dimensionality of the processed features.

7. The device of claim 1, further comprising an output interface (130) or a user interface (150) configured to output an identifier of an identified walker.

8. A method for walker identification comprising at a device (100):

    obtaining (S210) by an audio input interface (141) a sampled acoustic signal;
    obtaining (S210) by a vibration input interface (142) a sampled vibration signal;
    fusing (S220) by at least one hardware processor (110) the sampled acoustic signal and the sampled vibration signal into a fused signal;
    extracting (S230) by the at least one hardware processor (110) features from the fused signal; and
    identifying (S240) by the at least one hardware processor (110) a walker based on extracted features.

9. The method of claim 8, further comprising receiving by the vibration input interface (142) a vibration signal from a geophone (162).

10. The method of claim 8, wherein the at least one hardware processor (110) is configured to fuse the sampled audio signal and the sampled vibration signal by:

    extracting essentially overlapping frames of the sampled audio signal and the sampled vibration signal to obtain a plurality of audio frames and vibration frames;
    convolving each extracted audio frame with a wavelet to obtain audio coefficients;
    convolving each extracted vibration frame with the wavelet to obtain vibration coefficients;
    computing a weighted average of the audio coefficients and the vibration coefficients to obtain signal coefficients in the wavelet domain; and
    computing an inverse wavelet transform of the signal coefficients to obtain the fused signal in time-domain.

11. The method of claim 8, wherein the at least one hardware processor (110) is configured to extract the features by:

    extracting standard features;

computing Fourier modulus over time to obtain processed features; and
reducing the dimensionality of the processed features.

12. The method of claim 8, further comprising outputting by the at least one hardware processor (110) via an output interface (130) or a user interface (150) an identifier of an identified walker.

13. Computer program comprising program code instructions executable by a processor for implementing the method according to any one of claims 8-12.

14. Computer program product which is stored on a non-transitory computer readable medium and comprises program code instructions executable by a processor for implementing the method according to any one of claims 8-12.

100

Walker identification device

| Acoustic capture device 161 | Audio input interface 141 | Vibration input interface 142 | Vibration capture device 162 |

Processor      110

Data fusion unit      112

Feature extraction unit      113

Feature aggregation unit      114

Walker identification unit      115

Memory      120      User I/O      130

Output interface      150

Figure 1

S210 — Capture audio and vibration data

S220 — Fuse audio and vibration data

S230 — Extract features for gait identification

S240 — Use extracted features to identify walker

Figure 2

Figure 5

Figure 3

Figure 4

**EUROPEAN SEARCH REPORT**

Europäisches Patentamt
European Patent Office
Office européen des brevets

Application Number

EP 17 30 5545

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PO-SEN HUANG ET AL: "Multi-sensory features for personnel detection at border crossings", INFORMATION FUSION (FUSION), 2011 PROCEEDINGS OF THE 14TH INTERNATIONAL CONFERENCE ON, IEEE, 5 July 2011 (2011-07-05), pages 1-8, XP032009034, ISBN: 978-1-4577-0267-9 * abstract * * figure 2 * * table 3 * * sections 1, 3-5 * | 1-14 | INV. G10L25/51 G06K9/62 G10L25/18 |
| A | ANDEN JOAKIM ET AL: "Deep Scattering Spectrum", IEEE TRANSACTIONS ON SIGNAL PROCESSING, IEEE SERVICE CENTER, NEW YORK, NY, US, vol. 62, no. 16, 1 August 2014 (2014-08-01), pages 4114-4128, XP011554397, ISSN: 1053-587X, DOI: 10.1109/TSP.2014.2326991 [retrieved on 2014-07-21] * the whole document * | 1,8,13, 14 | |
| A | ALIREZA A DIBAZAR ET AL: "Intelligent acoustic and vibration recognition/alert systems for security breaching detection, close proximity danger identification, and perimeter protection", TECHNOLOGIES FOR HOMELAND SECURITY (HST), 2010 IEEE INTERNATIONAL CONFERENCE ON, IEEE, PISCATAWAY, NJ, USA, 8 November 2010 (2010-11-08), pages 351-356, XP031815802, ISBN: 978-1-4244-6047-2 * the whole document * | 1-3,7,8, 12-14 | |

TECHNICAL FIELDS SEARCHED (IPC)

G10L
G06K

-/--

The present search report has been drawn up for all claims

| Place of search | Date of completion of the search | Examiner |
|---|---|---|
| The Hague | 30 October 2017 | Deltorn, Jean-Marc |

EPO FORM 1503 03.82 (P04C01)

page 1 of 2

Europäisches
Patentamt
European
Patent Office
Office européen
des brevets

# EUROPEAN SEARCH REPORT

Application Number

EP 17 30 5545

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | EKIMOV ALEXANDER ET AL: "Rhythm analysis of orthogonal signals from human walking", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 129, no. 3, 9 March 2011 (2011-03-09) , pages 1306-1314, XP012136381, ISSN: 0001-4966, DOI: 10.1121/1.3533694 * the whole document * | 1-14 | |
| A | ANDEN JOAKIM ET AL: "Joint time-frequency scattering for audio classification", 2015 IEEE 25TH INTERNATIONAL WORKSHOP ON MACHINE LEARNING FOR SIGNAL PROCESSING (MLSP), IEEE, 17 September 2015 (2015-09-17), pages 1-6, XP032808402, DOI: 10.1109/MLSP.2015.7324385 [retrieved on 2015-11-10] * the whole document * | 1,8,13, 14 | |

TECHNICAL FIELDS
SEARCHED (IPC)

The present search report has been drawn up for all claims

| Place of search | Date of completion of the search | Examiner |
|---|---|---|
| The Hague | 30 October 2017 | Deltorn, Jean-Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## REFERENCES CITED IN THE DESCRIPTION

### Patent documents cited in the description

- US 7616115 B

### Non-patent literature cited in the description

- **RAFAEL LIMA DE CARVALHO ; PAULO FERNANDO FERREIRA ROSA.** Identification System for Smart Homes Using Footstep Sounds. IEEE, 2010
- **P. J. PHILLIPS ; S. SARKAR ; I. ROBLEDO ; P. GROTHER ; K. BOWYER.** The Gait Identification Challenge Problem: Data Sets and Baseline Algorithm. *Pattern Recognition,* 2002
- Proceedings. 16th International Conference. IEEE, 2002, vol. 1, 385-388
- **D. BALES ; P. TARAZAGA ; M. KASARDA ; D. BATRA ; A. WOOLARD ; J. D. POSTON ; V. MALLADI.** Gender Classification of Walkers via Underfloor Accelerometer Measurements. *IEEE Internet of Things Journal,* 2016
- Indoor Person Identification Through Footstep Induced Structural Vibration. **S. PAN ; N. WANG ; Y. QIAN ; I. VELIBEYOGLU ; H. Y. NOH ; P. ZHANG.** Proceedings of the 16th International Workshop on Mobile Computing Systems and Applications. ACM, 2015, 81-86
- **A. EKIMOV ; J. M. SABATIER.** Vibration and Sound Signatures of Human Footsteps in Buildings. *The Journal of the Acoustical Society of America,* 2006, vol. 118 (3), 762-768
- **F. J. FAHY.** Foundations of engineering acoustics. Academic press, 2000
- **M. S. HONS ; R. R. STEWART.** Transfer Functions of Geophones and Accelerometers and Their Effects on Frequency Content and Wavelets. *CREWES Res. Rep,* 2006, vol. 18, 1-18
- **J. ZHANG.** Multi-Source Remote Sensing Data Fusion: Status and Trends. *International Journal of Image and Data Fusion,* 2010, vol. 1 (1), 5-24
- **J. RAMIREZ ; J. M. GORRIZ ; J. C. SEGURA.** Voice Activity Detection. Fundamentals and Speech Recognition System Robustness. INTECH Open Access Publisher, 2007
- **A. EKIMOV ; J. M. SABATIER.** Rhythm Analysis of Orthogonal Signals from Human Walking. *Journal of the Acoustical Society of America,* 2011, vol. 129 (3), 1306-1314
- **S. MALLAT.** A Wavelet Tour of Signal Processing. Academic Press, 1999
- Text-Independent Speaker Recognition. **D. A. REYNOLDS ; W. M. CAMPBELL.** Springer Handbook of Speech Processing. Springer, 2008, 763-782
- **A. MARTIN ; G. DODDINGTON ; T. KAMM ; M. ORDOWSKI ; M. PRZYBOCKI.** The DET Curve in Assessment of Detection Task Performance. *Tech. Rep., DTIC Document,* 1997